# EUROPEAN PATENT APPLICATION

(11) **EP 4 520 559 A1**
(43) Date of publication of application: **12.03.2025**
(21) Application number: 23814950.4
(22) Date of filing: 16.05.2023
(51) Int. Cl.: B60H 1/00, B60L 58/26, H01M 10/613, H01M 10/625, H01M 10/6556, H01M 10/6568, H01M 10/6569

(54) **VEHICLE THERMAL MANAGEMENT SYSTEM AND VEHICLE**

(30) Priority: 31.05.2022 CN 202210606463
(71) Applicant: BYD Company Limited, Shenzhen, Guangdong 518118 (CN)
(72) Inventor: LIU, Jun, Shenzhen, Guangdong 518118 (CN); XU, Zhiqin, Shenzhen, Guangdong 518118 (CN); LIU, Mingliang, Shenzhen, Guangdong 518118 (CN); CHEN, Xiaochi, Shenzhen, Guangdong 518118 (CN); ZHONG, Pengsong, Shenzhen, Guangdong 518118 (CN)
(74) Representative: Taor, Simon Edward William
(86) International application number: PCT/CN2023/094482
(87) International publication number: WO 2023/231765

(57) **Abstract**

A vehicle (200), having a thermal management system (100). The thermal management system (100) of the vehicle (200) comprises an engine cooling system (10), an air conditioning system (30), and a low-temperature cooling system (20). The engine cooling system (10) comprises an engine (11), an intercooler (12), a first heat dissipation device (15), and a first fan (13). An air outlet end (121) of the intercooler (12) is in communication with an air inlet manifold (111), and an air inlet end (122) of the intercooler (12) is in communication with a supercharger (112). The first fan (13) is used for dissipating heat for the intercooler (12) and the first heat dissipation device (15). The low-temperature cooling system (20) comprises a second heat dissipation device (22) and a second fan (24), and the second fan (24) is used for dissipating heat for the second heat dissipation device (22) and a condenser (33).

## Description

### CROSS-REFERENCE TO RELATED APPLICATIONS

The present disclosure claims to the priority of Chinese Patent No "202210606463.7" filed by the BYD Co., Ltd. on May 31, 2022 and entitled "THERMAL MANAGEMENT SYSTEM OF VEHICLE, AND VEHICLE", which is incorporated herein by reference in its entirety.

### FIELD

The present disclosure relates to the technical field of thermal management systems of vehicles, and in particular, to a thermal management system of a vehicle, and a vehicle.

### BACKGROUND

A radiator of a hybrid vehicle generally includes an intercooler for cooling an intake air of an engine, a high-temperature radiator for cooling a coolant in the engine, a low-temperature radiator for cooling an electric control distribution box of a motor, and a condenser for cooling an air conditioning system.

In the related art, there is only one electronic fan in the hybrid vehicle, and control of a rotation speed of the electronic fan needs to meet cooling requirements of the intercooler, the high-temperature radiator, the low-temperature radiator, and the condenser simultaneously. To avoid overheating of components, the rotation speed of the electronic fan meets a largest rotation speed requirement of the intercooler, the high-temperature radiator, the low-temperature radiator, and the condenser. Therefore, the electronic fan has technical problems of high energy consumption and a poor heat dissipation effect.

### SUMMARY

The present disclosure is intended to resolve at least one of the technical problems existing in the related art. Therefore, the present disclosure provides a thermal management system of a vehicle. During running, temperatures of a first radiator and an intercooler are close, and temperatures of a second radiator and a condenser are close. Therefore, a first fan and a second fan are used to dissipate heat, and rotation speeds of the first fan and the second fan are controlled more accurately.

The present disclosure further provides a vehicle.

A thermal management system of a vehicle according to an embodiment of a first aspect of the present disclosure is provided. The thermal management system includes: an engine cooling system, the engine cooling system includes: an engine, the engine includes an intake manifold and a supercharger, an intercooler, an air outlet end of the intercooler is in communication with the intake manifold, and an air inlet end of the intercooler is in communication with the supercharger, a first radiator, the first radiator is connected to the engine, and a first fan, the first fan is configured to dissipate heat from the intercooler and the first radiator; an air conditioning system, the air conditioning system includes a condenser; and a low-temperature cooling system, the low-temperature cooling system includes: a second radiator, and a second fan, the second fan is configured to dissipate heat from the second radiator and the condenser.

According to the thermal management system of the vehicle in this embodiment of the present disclosure, temperatures of the first radiator and the intercooler are close during operating. Therefore, when the first fan is used to perform a heat dissipation operation, a rotation speed of the first fan is controlled more accurately. In addition, temperatures of the second radiator and the condenser are close during operating. Therefore, when the second fan is used to perform a heat dissipation operation, a rotation speed of the second fan is controlled more accurately.

In some embodiments of the present disclosure, the thermal management system further includes a controller. The controller is configured to control running of the engine cooling system according to a temperature of a coolant of the engine.

In some embodiments of the present disclosure, the engine cooling system further includes: an electronic thermostat, the electronic thermostat is arranged between a first end of the engine and a third end of the first radiator; and a first water pump, the first water pump is arranged between a second end of the engine and a fourth end of the first radiator. The controller is configured to adjust a rotation speed of the first water pump and an opening degree of the electronic thermostat according to the temperature of the coolant of the engine.

In some embodiments of the present disclosure, the engine cooling system further includes a first temperature sensor. The first temperature sensor is arranged between the first radiator and the engine, and the first temperature sensor is configured to detect the temperature of the coolant of the engine. The controller is configured to adjust a rotation speed of the first fan according to the temperature of the coolant of the engine.

In some embodiments of the present disclosure, the controller is configured to: first adjust a rotation speed of the first water pump and an opening degree of the electronic thermostat according to the temperature of the coolant, and then adjust the rotation speed of the first fan according to the temperature of the coolant.

In some embodiments of the present disclosure, the thermal management system further includes: a controller. The controller is configured to control running of the low-temperature cooling system according to a temperature of a coolant.

In some embodiments of the present disclosure, the low-temperature cooling system is formed with a first branch and a second branch arranged in parallel. The low-temperature cooling system further includes: a second water pump; a second temperature sensor, the second temperature sensor is connected in series with the second water pump and the second radiator; a drive motor, the drive motor is connected to the first branch; and a motor controller. The motor controller is electrically connected to the drive motor, and the motor controller is connected to the second branch. The controller is configured to adjust a rotation speed of the second water pump and a rotation speed of the second fan according to the temperature of the coolant.

In some embodiments of the present disclosure, the low-temperature cooling system further includes: a generator, the generator is electrically connected to the motor controller, and the generator is connected in series with the motor controller on the second branch; and a direct current distributor. The direct current distributor is electrically connected to the motor controller, and the direct current distributor is connected in series with the drive motor on the first branch.

In some embodiments of the present disclosure, the thermal management system further includes an expansion kettle. The expansion kettle is provided with a water inlet and a water outlet, the water outlet is connected to a liquid inlet of the second water pump, and the water inlet is in communication with the second radiator.

In some embodiments of the present disclosure, the air conditioning system includes: a compressor, an evaporator, and a first control valve. The first control valve is connected in series with the compressor, the evaporator, and the condenser.

In some embodiments of the present disclosure, the air conditioning system further includes: a second control valve, and a heat exchanger. The heat exchanger and the second control valve are arranged in series, the heat exchanger and the second control valve are arranged in parallel with the evaporator, and the heat exchanger is adapted to exchange heat with a battery pack.

In some embodiments of the present disclosure, the thermal management system further includes a controller. The controller is configured to control switching of the first control valve and the second control valve according to a temperature of the battery pack and a temperature of a passenger compartment, and the controller is configured to adjust a rotation speed of the compressor and the rotation speed of the second fan.

A vehicle according to an embodiment of a second aspect of the present disclosure is provided. The vehicle includes a thermal management system of the vehicle.

Additional aspects and advantages of the disclosure will be given in the following description, some of which will become apparent from the following description or may be learned from practices of the disclosure.

### BRIEF DESCRIPTION OF THE DRAWINGS

The foregoing and/or additional aspects and advantages of the disclosure will become apparent and comprehensible in the description of the embodiments made with reference to the following accompanying drawings.
FIG. 1 is a schematic structural diagram of an engine cooling system according to an embodiment of the present disclosure;
FIG. 2 is a schematic structural diagram of a low-temperature cooling system and an air conditioning system according to an embodiment of the present disclosure;
FIG. 3 is a control policy for an engine cooling system according to an embodiment of the present disclosure;
FIG. 4 is a control policy for a low-temperature cooling system according to an embodiment of the present disclosure;
FIG. 5 is a control policy for an air conditioning system according to an embodiment of the present disclosure;
FIG. 6 is a schematic diagram of a vehicle according to an embodiment of the present disclosure;
FIG. 7 is a schematic diagram of a detailed structure of an engine cooling system according to an embodiment of the present disclosure; and
FIG. 8 is a schematic diagram of a detailed structure of a low-temperature cooling system and an air conditioning system according to an embodiment of the present disclosure.

In the drawings:
100: Thermal management system;
200: Vehicle; 201: Battery pack;
10: Engine cooling system; 11: Engine; 111: Intake manifold; 112: Supercharger; 113: First end; 114: Second end; 12: Intercooler; 121: Air outlet end; 122: Air inlet end; 13: First fan; 14: First water pump; 15: First radiator; 151: Third end; 152: Fourth end; 16: First temperature sensor; 17: Electronic thermostat;
20: Low-temperature cooling system; 21: Drive motor; 22: Second radiator; 23: Second water pump; 231: Liquid inlet; 24: Second fan; 25: Motor controller; 26: Generator; 27: Direct current distributor; 28: Second temperature sensor;
30: Air conditioning system; 31: Compressor; 32: Evaporator; 33: Condenser; 34: First control valve; 35: Second control valve; 36: Expansion kettle; 361: Water inlet; 362: Water outlet; 37: Pressure sensor; 38: Heat exchanger;
40: Controller.

### DETAILED DESCRIPTION

The embodiments of the present disclosure are described in detail below, and the embodiments described with reference to accompanying drawings are exemplary.

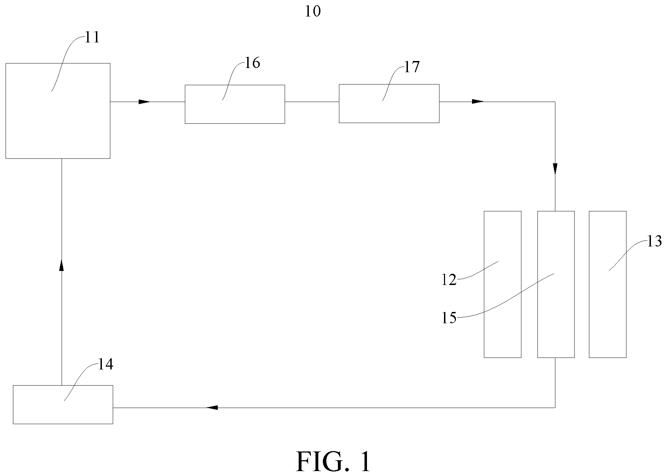

A thermal management system 100 of a vehicle 200 according to an embodiment of the present disclosure is described below with reference to FIG. 1 to FIG. 5, FIG. 7, and FIG. 8. The present disclosure further provides a vehicle 200 having the foregoing thermal management system 100.

As shown in FIG. 1, FIG. 2, and FIG. 7, the thermal management system 100 of the vehicle 200 in this embodiment of the present disclosure includes an engine cooling system 10, a low-temperature cooling system 20, and an air conditioning system 30.

Specifically, the engine cooling system 10 includes an engine 11, an intercooler 12, a first radiator 15, and a first fan 13. The engine includes an intake manifold 111 and a supercharger 112. An air outlet end 121 of the intercooler 12 is in communication with the intake manifold 111, and an air inlet end 122 of the intercooler 12 is in communication with the supercharger 112. The engine 11 and the first radiator 15 are connected in series with each other. The first fan 13 is configured to dissipate heat from the intercooler 12 and the first radiator 15. The engine 11 and the first radiator 15 are arranged in series, so that heat generated during operating of the engine 11 can be carried away by a coolant and dissipated to the outside world through the first radiator 15. In addition, the first fan 13 and the first radiator 15 are arranged oppositely, and the first fan 13 faces the first radiator 15. Therefore, the first fan 13 can deliver air to the first radiator 15 to reduce the temperature of the coolant in the first radiator 15, thereby reducing the temperature of the engine cooling system 10. In addition, when the engine 11 is running, the intercooler 12 can reduce the temperature of a high-temperature gas, thereby reducing an intake air temperature of the engine 11.

Referring to FIG. 1, the intercooler 12 and the first radiator 15 are arranged oppositely, and the first fan 13 and the first radiator 15 are arranged oppositely. In such an arrangement, the first fan 13 can dissipate heat from both the first radiator 15 and the intercooler 12, so that an integration degree of the thermal management system 100 can be improved. In addition, a location where an air-cooled condenser 33 is originally arranged may be left free, which is conducive to optimizing space of a compartment of the engine 11. In addition, the temperature of the intercooler 12 is close to the temperature of the first radiator 15, and the influence on each other is small, which is conducive to increasing the service life of the intercooler 12 and the first radiator 15.

In addition, the low-temperature cooling system 20 includes a second radiator 22 and a second fan 24. The second fan 24 is arranged on a side of the second radiator 22. The air conditioning system 30 includes the condenser 33. The second radiator 22 and the condenser 33 are arranged oppositely. The second fan 24 is configured to dissipate heat from the second radiator 22 and the condenser 33. In other words, the second radiator 22 of the low-temperature cooling system 20 and the condenser 33 of the air conditioning system 30 are arranged oppositely, and the second fan 24 and the second radiator 22 are arranged oppositely. Therefore, the first fan 13 can dissipate heat from both the second radiator 22 and the condenser 33, so that the integration degree of the thermal management system 100 can be improved. In addition, the temperature of the condenser 33 is close to the temperature of the second radiator 22, and the influence on each other is small, which is conducive to increasing the service life of the intercooler 12 and the first radiator 15.

Therefore, the thermal management system 100 has the first fan 13 and the second fan 24. The first fan 13 and the second fan 24 are independently controlled. A rotation speed of the first fan 13 only needs to meet a cooling requirement of the intercooler 12 and the first radiator 15, and a rotation speed of the second fan 24 only needs to meet a cooling requirement of the second radiator 22 and the condenser 33, which is conducive to accurate control of thermal management of the whole vehicle. Moreover, the intercooler 12 and the first radiator 15 share the first fan 13, and the second radiator 22 and the condenser 33 share the second fan 24. Therefore, temperature interference between the intercooler 12 and the first radiator 15 is low, and temperature interference between the second radiator 22 and the condenser 33 is also low.

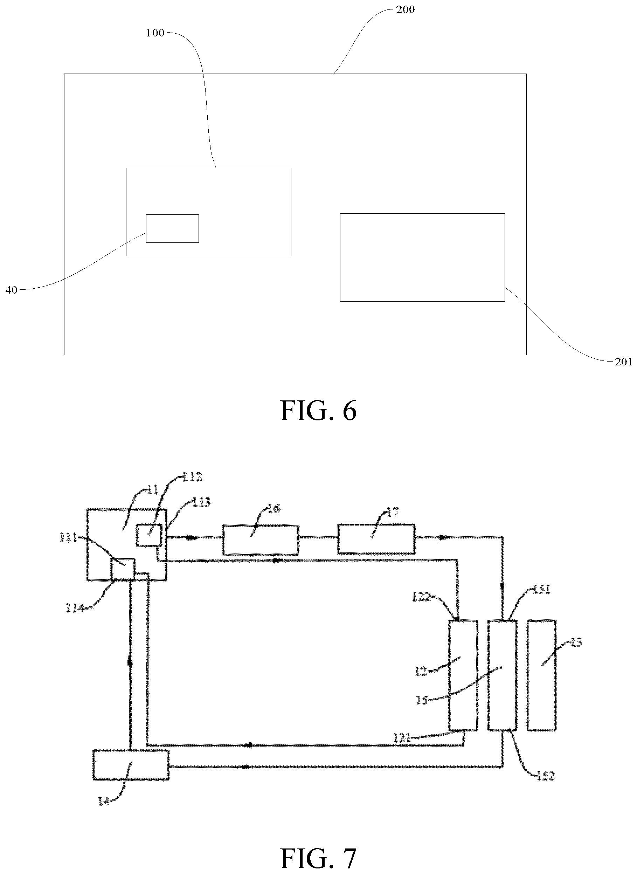

As shown in FIG. 6, the thermal management system 100 further includes a controller 40. The controller 40 is configured to control running of the engine cooling system 10 according to a temperature of a coolant of the engine 11. Therefore, normal use of the engine cooling system 10 is facilitated.

As shown in FIG. 1 and FIG. 7, the engine cooling system 10 further includes a first water pump 14 and an electronic thermostat 17. The electronic thermostat 17 is arranged between a first end 113 of the engine 11 and a third end 151 of the first radiator 15. The first water pump 14 is arranged between a second end 114 of the engine 11 and a fourth end 152 of the first radiator 15. The first water pump 14 can drive the coolant to circulate among the engine 11, the first water pump 14, and the first radiator 15. When the coolant flows through the engine 11, the coolant can reduce the temperature of the engine 11. When the coolant flows through the first radiator 15, the first radiator 15 can dissipate heat from the coolant. In addition, the electronic thermostat 17 can automatically adjust the amount of water entering the first radiator 15 according to the temperature of the cooling water, thereby changing the circulation range of the water, to adjust the heat dissipation capability of the first radiator 15, and ensure that the engine 11 operates in a suitable temperature range. The electronic thermostat 17 needs to maintain a good technical state; otherwise, normal operating of the engine 11 is severely affected. For example, if a main valve of the electronic thermostat 17 opens too late, the engine 11 is overheated. If the main valve opens too early, a warm-up time of the engine 11 is extended, and the temperature of the engine 11 is excessively low.

The controller 40 is configured to adjust a rotation speed of the first water pump 14 and an opening degree of the electronic thermostat 17 according to the temperature of the coolant. Specifically, the electronic thermostat 17 can control the flow of the coolant flowing through the electronic thermostat 17, and the first water pump 14 can control a flow rate of the coolant. That is to say, by controlling the temperature of the coolant and the flow of the coolant, the engine 11 can be rapidly cooled.

As shown in FIG. 1, the engine cooling system 10 further includes a first temperature sensor 16. The first temperature sensor 16 is arranged between the first radiator 15 and the engine 11. The first temperature sensor 16 is configured to detect the temperature of the coolant of the engine 11. The controller 40 is configured to adjust a rotation speed of the first fan 13 according to the temperature of the coolant. Therefore, when the engine cooling system 10 is running, the controller 40 can adjust the rotation speed of the first fan 13 according to the temperature of the coolant detected by the first temperature sensor 16. That is to say, by properly controlling the rotation speed of the first fan 13, the temperature of the coolant in the engine cooling system 10 can be controlled, so that the rotation speed of the first fan 13 can be controlled according to a running state of the engine 11. For example, when the rotation speed of the engine 11 increases, the engine 11 dissipates more heat to the outside world, and the temperature of the coolant also increases correspondingly. In this case, the rotation speed of the first fan 13 can be controlled by the controller 40, to control the temperature of the coolant, so that the temperature of the engine 11 is equalized or the temperature of the engine 11 is quickly reduced.

The controller 40 is configured to: first adjust a rotation speed of the first water pump 14 and an opening degree of the electronic thermostat 17 according to the temperature of the coolant, and then adjust the rotation speed of the first fan 13 according to the temperature of the coolant. Specifically, the controller 40 may first control the opening degree of the electronic thermostat 17, and then the controller 40 controls the flow rate of the first water pump 14. Further, the controller 40 controls the rotation speed of the first fan 13. That is to say, the controller 40 preferentially controls a low-power actuator. Only when the low-power actuator does not meet the cooling requirement, the controller 40 adjusts a high-power actuator. Therefore, the energy consumption of the thermal management system 100 can be effectively reduced.

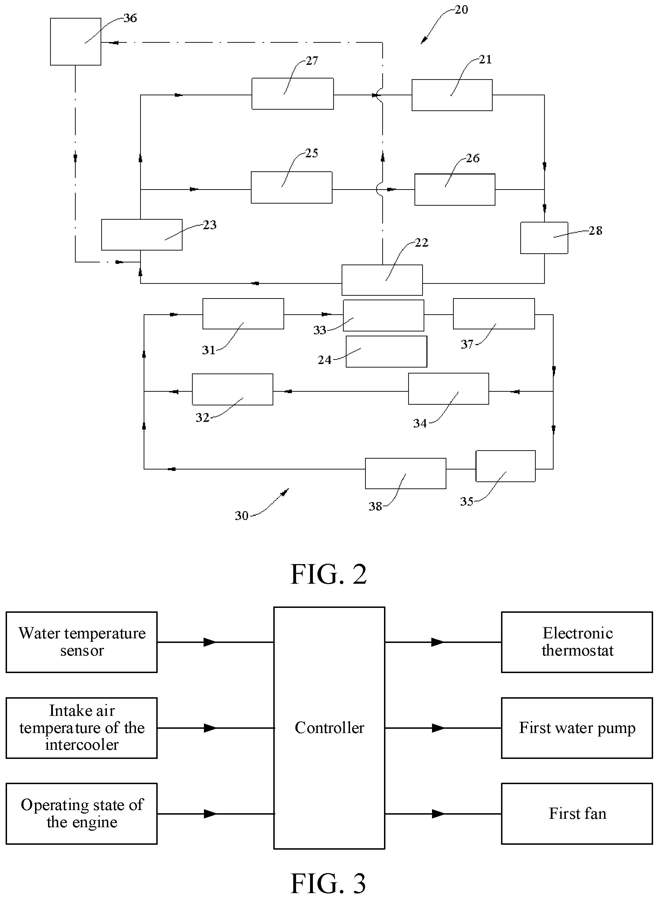

Referring to FIG. 2 and FIG. 6, the thermal management system 100 further includes a controller 40. The controller 40 is configured to control running of the low-temperature cooling system 20 according to a temperature of a coolant. Therefore, normal running of the engine cooling system 10 and the low-temperature cooling system 20 may be adjusted and controlled by the controller 40.

As shown in FIG. 2, The low-temperature cooling system 20 further includes a second water pump 23, a second temperature sensor 28, a drive motor, and a motor controller 25. The low-temperature cooling system 20 is formed with a first branch and a second branch arranged in parallel. The second water pump 23, the second temperature sensor 28, and the second radiator 22 are connected in series with each other. The motor controller 25 is electrically connected to the drive motor 21. The drive motor 21 is connected to the first branch. The motor controller 25 is connected to the second branch. In other words, the second water pump 23 may drive the coolant to circulate among the driving motor 21, the motor controller 25, and the second radiator 22. When the coolant flows through the drive motor 21 and the motor controller 25, the coolant may reduce the temperature of the drive motor 21 and the temperature of the motor controller 25. When the coolant flows through the second radiator 22, the second radiator 22 can dissipate heat from the coolant.

The motor controller 25 is configured to control running parameters of the drive motor 21. The low-temperature cooling system 20 is formed with the first branch and the second branch, and the second branch and the first branch are arranged in parallel with each other. Therefore, the motor controller 25, the drive motor 21, and the second radiator 22 are connected in parallel with each other, so that interference among the motor controller 25, the drive motor 21, and the second radiator 22 is reduced.

In addition, the thermal management system 100 further includes a controller 40. The controller 40 is configured to adjust a rotation speed of the second water pump 23 and a rotation speed of the second fan 24 according to the temperature of the coolant. In other words, when the low-temperature cooling system 20 is running, the controller 40 may adjust the rotation speeds of the second water pump 23 and the second fan 24 according to the temperature of the coolant detected by the second temperature sensor 28. That is to say, the controller 40 preferentially controls the low-power actuator. When the low-power actuator does not meet the cooling requirement, the controller 40 adjusts the high-power actuator, so that the energy consumption of the thermal management system 100 can be effectively reduced.

As shown in FIG. 2, the low-temperature cooling system 20 further includes a generator 26 and a direct current distributor 27. The generator 26 and the direct current distributor 27 are both electrically connected to the motor controller 25. The direct current distributor 27 is connected in series with the drive motor 21 on the first branch. The generator 26 is connected in series with the motor controller 25 on the second branch. The generator 26 and the direct current distributor 27 are not in a normally open state. By connecting the engine 11 and the motor controller 25 in series, and connecting the direct current distributor 27 and the drive motor 21 in series, both the second branch and the first branch can be continuously turned on, thereby avoiding a situation in which the coolant still flows through a branch when heat is not generated in the branch. For example, when the engine 11 is used for running of the vehicle 200, some energy may be recovered. When the vehicle 200 is charged, the direct current distributor 27 may convert alternating current into direct current for the vehicle 200, to facilitate charging of the vehicle 200.

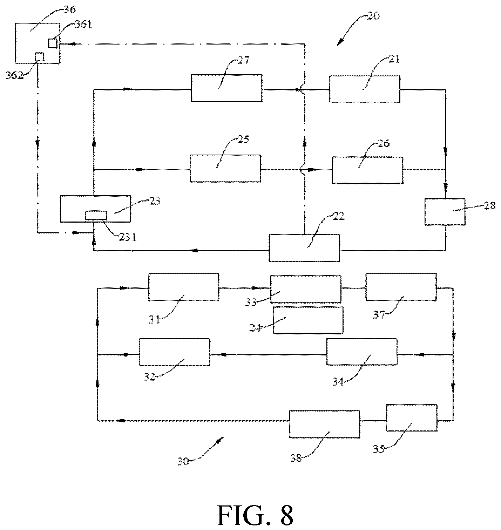

As shown in FIG. 2 and FIG. 8, the low-temperature cooling system 20 further includes an expansion kettle 36. The expansion kettle 36 is provided with a water inlet 361 and a water outlet 362, the water outlet 362 is connected to a liquid inlet 231 of the second water pump 23, and the water inlet 361 is connected to the second radiator 22. In other words, when the flow rate of the second water pump 23 increases, the coolant in the low-temperature cooling system 20 is insufficient. The coolant is injected into the low-temperature cooling system 20 through the expansion kettle 36, so that a heat exchange requirement of the low-temperature cooling system 20 can be satisfied.

As shown in FIG. 1, The air conditioning system 30 includes a compressor 31, an evaporator 32, a condenser 33, and a first control valve 34. The compressor 31, the evaporator 32, the condenser 33, and the first control valve 34 are connected in series with each other. The condenser 33 and the second radiator 22 are arranged oppositely. In the air conditioning system 30, a high-temperature and high-pressure cooling medium compressed by the compressor 21 enters the condenser 22 and is condensed to become a medium-temperature and medium-pressure liquid cooling medium. Secondly, the medium-temperature and medium-pressure liquid cooling medium is throttled and depressurized through a throttling element to become a low-temperature and low-pressure liquid cooling medium. Then, the low-temperature and low-pressure liquid cooling medium enters the evaporator 24 to cool the air in the passenger compartment.

As shown in FIG. 2, the air conditioning system 30 further includes a second control valve 35 and a heat exchanger 38. The heat exchanger 38 and the second control valve 35 are arranged in series, the heat exchanger 38 and the second control valve 35 are arranged in parallel with the evaporator 32, and the heat exchanger 38 is adapted to exchange heat with a battery pack 201. In other words, the air conditioning system 30 may further exchange heat with the battery pack 201 through the heat exchanger 38. Therefore, the air conditioning system 30 can reduce the temperature of the battery pack 201.

In addition, the air conditioning system 30 further includes a pressure sensor 37. The pressure sensor 37 is arranged between the compressor 31 and the condenser 33. The pressure sensor 37 may be configured to detect a pressure of the coolant.

the thermal management system 100 further includes a controller 40. The controller 40 is configured to control switching of the first control valve 34 and the second control valve 35 according to a temperature of the battery pack 201 and a temperature of a passenger compartment, and the controller 40 is configured to adjust a rotation speed of the compressor 31 and the rotation speed of the second fan 24. Specifically, the heat exchanger 38 and the evaporator 32 are arranged in parallel, the evaporator 32 and the first control valve 34 are arranged in series, and the heat exchanger 38 and the second control valve 35 are arranged in series. Therefore, when the passenger compartment and the battery pack 201 have a temperature reduction need, switching of the first control valve 34 and the second control valve 35 may be selectively controlled. For example, when the evaporator 32 is in operation, the first control valve 34 is opened, and the coolant may pass through the first control valve 34 and then exchange heat at the evaporator 32, thereby reducing the temperature of the passenger compartment. When the temperature of the battery pack 201 needs to be reduced, the second control valve 35 is opened, and the coolant may pass through the second control valve 35 and then exchange heat with the battery pack 201 at the heat exchanger 38, thereby reducing the temperature of the battery pack 201.

The controller 40 may further control the rotation speed of the compressor 31 and the rotation speed of the second fan 24 according to the temperature of the battery pack 201 and the temperature of the passenger compartment. In other words, when there is a large difference between an actual temperature of the battery pack 201 and a preset temperature of the battery pack 201, the controller 40 may perform control to increase the rotation speed of the compressor 31 and the rotation speed of the second fan 24. Therefore, the temperature of the coolant outputted by the compressor 31 is lower, the temperature reduction of the battery pack 201 is facilitated, and the second fan 24 can quickly dissipate heat from the condenser 33. When a driver inputs a new preset temperature, the controller 40 may perform control to increase the rotation speed of the compressor 31 and the rotation speed of the second fan 24, so that the temperature of the coolant outputted by the compressor 31 is lower, the temperature reduction of the battery pack 201 is facilitated, and the second fan 24 can quickly dissipate heat from the condenser 33.

With reference to FIG. 1 to FIG. 5, a control policy for a thermal management system 100 in an embodiment of the present disclosure is described.

With reference to FIG. 1 and FIG. 3, in Embodiment 1 of the present disclosure, a control method for the thermal management system 100 includes the following steps:
The engine 11 is started. A cooling water temperature of the engine 11 is T, a rotation speed of the first water pump 14 is C, and a rotation speed of the first fan 13 is B. A relationship between the cooling water temperature T and a predetermined value T1 is determined as follows:
When T > T1, a rotation speed of the first water pump 14 is C1, a rotation speed of the first fan 13 is B1, and an opening degree of the electronic thermostat 17 is increased. In other words, when the cooling water temperature T is greater than the predetermined value T1, the rotation speed of the first water pump 14 is fixed at C1, and the rotation speed of the first fan 13 is fixed at B1. Then, by increasing the opening degree of the electronic thermostat 17, the flow of the coolant passing through the engine 11 can be increased, so that the temperature of the engine 11 can be effectively reduced.

If the cooling water temperature T is balanced at T1, the first fan 13 maintains the rotation speed B1, and the first water pump 14 maintains the rotation speed C1. In other words, if the cooling water temperature T is balanced at T1 after the opening degree of the electronic thermostat 17 is increased, there is no need to adjust the rotation speed of the first fan 13, the rotation speed of the first water pump 14, and the opening degree of the electronic thermostat 17, and the engine cooling system 10 is in a state of thermal balance. Alternatively, if the cooling water temperature T is still greater than T1 when the electronic thermostat 17 is adjusted to the maximum opening degree, the rotation speed of the first water pump 14 is increased to C2. In other words, if the cooling water temperature T is still greater than T1 when the electronic thermostat 17 is adjusted to the maximum opening degree, the method for controlling the cooling water temperature by adjusting the electronic thermostat 17 cannot be implemented. Then, the rotation speed of the first water pump 14 needs to be increased to C2. By increasing the rotation speed of the first water pump 14, the flow rate of the coolant in the engine cooling system 10 can be increased, thereby effectively reducing the temperature of the engine 11.

In addition, the step of increasing the rotation speed of the first water pump 14 to C2 if the cooling water temperature T is still greater than T1 when the electronic thermostat 17 is adjusted to the maximum opening degree further includes:
If the cooling water temperature T is balanced at T1, the first fan 13 maintains the rotation speed B1, and the first water pump 14 maintains the rotation speed C2. In other words, if the cooling water temperature T is balanced at T1 after the rotation speed of the first water pump 14 is increased, the rotation speed of the first water pump 14 does not need to be adjusted again, and the engine cooling system 10 is in a state of thermal balance. Alternatively, if the cooling water temperature T is still greater than T1 when the rotation speed of the first water pump 14 is increased to the maximum rotation speed C3, the rotation speed of the first fan 13 is increased to B2. In other words, if the cooling water temperature T is still greater than T1 when the rotation speed of the first water pump 14 is increased to the maximum rotation speed C3, the method for controlling the cooling water temperature by adjusting the rotation speed of the first water pump 14 cannot be implemented. Then, the rotation speed of the first fan 13 needs to be increased to B2. By increasing the rotation speed of the first fan 13, the temperature of the coolant in the engine cooling system 10 is reduced, thereby effectively reducing the temperature of the engine 11.

The step of starting the engine 11 further includes:
When an intake air temperature of the intercooler 12 is greater than a target value, the rotation speed of the first fan 13 is A. A maximum value is selected from the rotation speed A of the first fan 13 and a rotation speed B of the first fan 13 as an actual rotation speed of the first fan 13. In other words, when both the intercooler 12 and the first radiator 15 need to dissipate heat, the first fan 13 corresponds to two heat sources. Therefore, the maximum value is selected from the rotation speed A and the rotation speed B as the actual rotation speed of the first fan 13, so that the temperature of the intercooler 12 and the temperature of the first fan 13 can be effectively reduced.

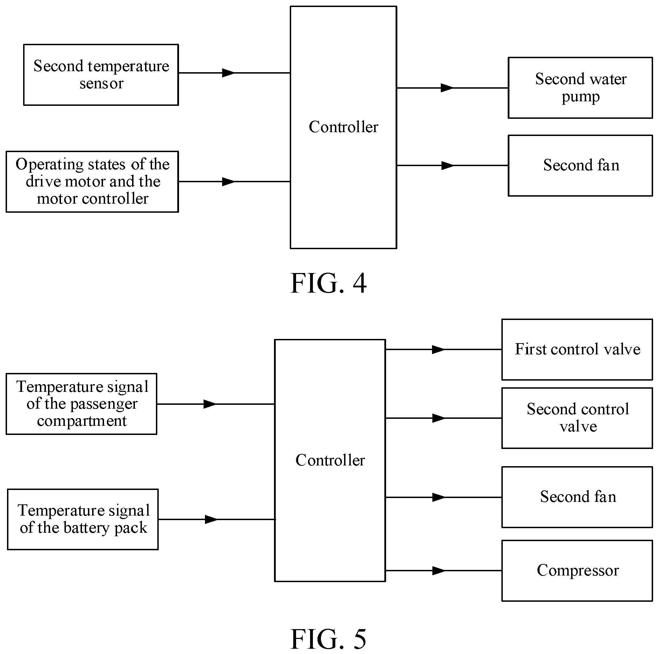

With reference to FIG. 2 and FIG. 4, in Embodiment 2 of the present disclosure, a control method for the thermal management system 100 includes the following steps:
The drive motor 21 and the motor controller 25 are started. A temperature of the second temperature sensor 28 is t. A relationship between the temperature t of the second temperature sensor 28 and a predetermined value t1 is determined as follows:
When t > t1, a rotation speed of the second fan 24 is E1, and a rotation speed of the second water pump 23 is increased to D1. In other words, when the cooling water temperature t is greater than the predetermined value t1, the rotation speed of the second fan 24 is fixed at E1. Then, by increasing the rotation speed of the second water pump 23 to D1, the flow rate of the coolant flowing through the engine 11 is increased, so that the temperature of the engine 11 can be effectively reduced.

If the temperature t is balanced at t1, the second fan 24 maintains the rotation speed E1, and the second water pump 23 maintains the rotation speed D1. In other words, if the cooling water temperature t is balanced at t1 after the rotation speed of the second water pump 23 is increased, the rotation speed of the second water pump 23 does not need to be adjusted again, and the low-temperature cooling system 20 is in a state of thermal balance. Alternatively, if the temperature t is still greater than t1 when the rotation speed of the second water pump 23 is increased to the maximum rotation speed D2, the rotation speed of the second fan 24 is increased to E2. In other words, if the cooling water temperature t is still greater than t1 when the rotation speed of the second water pump 23 is increased to the maximum rotation speed D2, the method for controlling the cooling water temperature by adjusting the rotation speed of the second water pump 23 cannot be implemented. Then, the rotation speed of the second fan 24 needs to be increased to E2. By increasing the rotation speed of the second fan 24, the temperature of the coolant in the low-temperature cooling system 20 can be reduced, so that the temperature of the drive motor 21 and the temperature of the motor controller 25 can be effectively reduced.

With reference to FIG. 2 and FIG. 4, in Embodiment 3 of the present disclosure, a control method for the thermal management system 100 includes the following steps:
The compressor 31 is started and the coolant flows through the evaporator 32, where an actual temperature of the passenger compartment is h, and a rotation speed of the second fan 24 is G1; and a relationship between the temperature h and a first predetermined value h1 is determined as follows:
When h ≤ h1, a rotation speed of the compressor 31 is F1-1, and a rotation speed of the second fan 24 is G1-1. In other words, if the cooling water temperature h is balanced at h1 when the rotation speed of the compressor 31 is fixed at F1-1 and the rotation speed of the second fan 24 is fixed at G1-1, there is no need to adjust the rotation speeds of the compressor 31 and the second fan 24, and the air conditioning system 30 is in a state of thermal balance.

When h > h1, the rotation speed of the compressor 31 is F1-1, and the rotation speed of the second fan 24 is increased to G1-2. In other words, when the cooling water temperature h is greater than the predetermined value h1, the rotation speed of the compressor 31 is fixed at F1-1. Then, by increasing the rotation speed of the second fan 24 to G1-2, that is, by increasing the rotation speed of the second fan 24, the temperature of the coolant in the air conditioning system 30 is reduced.

If the temperature h is balanced at h1, the second fan 24 maintains the rotation speed G1-2. In other words, if the cooling water temperature h is balanced at h1 after the rotation speed of the second fan 24 is increased, the rotation speed of the second fan 24 does not need to be adjusted again, and the air conditioning system 30 is in a state of thermal balance. Alternatively, if the temperature h is still greater than h1 when the rotation speed of the second fan 24 is increased to the maximum rotation speed G1-3, the rotation speed of the compressor 31 is increased to F1-2. In other words, if the cooling water temperature h is still greater than h1 when the rotation speed of the second fan 24 is increased to the maximum rotation speed G1-3, the method for controlling the cooling water temperature by adjusting the rotation speed of the second fan 24 cannot be implemented. Then, the rotation speed of the compressor 31 needs to be increased to F1-2. By increasing the rotation speed of the compressor 31, the flow of the coolant in the air conditioning system 30 can be increased, thereby effectively reducing the temperature of the passenger compartment.

In addition, the foregoing step in which the compressor 31 is started and the coolant flows through the evaporator 32, where an actual temperature of the passenger compartment is h further includes:
The second control valve 35 is opened, where an actual temperature of the battery pack 201 is i, and a rotation speed of the second fan 24 is G2, and a relationship between the temperature i and a first predetermined value i1 is determined. In other words, if the second control valve 35 is opened when the temperature of the battery pack 201 needs to be reduced, a control policy for the rotation speed of the second fan 24 and the rotation speed of the compressor 31 is as follows:
When i ≤ i1, a rotation speed of the compressor 31 is F2-1, and a rotation speed of the second fan 24 is G2-1. In other words, if the cooling water temperature i is balanced at i1 when the rotation speed of the compressor 31 is fixed at F2-1 and the rotation speed of the second fan 24 is fixed at G2-1, there is no need to adjust the rotation speeds of the compressor 31 and the second fan 24, and the air conditioning system 30 is in a state of thermal balance.

When i > i1, the rotation speed of the compressor 31 is F2-1, and the rotation speed of the second fan 24 is increased to G2-2. In other words, when the cooling water temperature i is greater than the predetermined value i1, the rotation speed of the compressor 31 is fixed at F2-1. Then, by increasing the rotation speed of the second fan 24 to G2-2, that is, by increasing the rotation speed of the second fan 24, the temperature of the coolant in the air conditioning system 30 is reduced.

If the temperature i is balanced at i1, the second fan 24 maintains the rotation speed G2-2. In other words, if the cooling water temperature i is balanced at i1 after the rotation speed of the second fan 24 is increased, the rotation speed of the second fan 24 does not need to be adjusted again, and the air conditioning system 30 is in a state of thermal balance. Alternatively, if the temperature i is still greater than i1 when the rotation speed of the second fan 24 is increased to the maximum rotation speed G2-3, the rotation speed of the compressor 31 is increased to F2-2. In other words, if the cooling water temperature i is still greater than i1 when the rotation speed of the second fan 24 is increased to the maximum rotation speed G2-3, the method for controlling the cooling water temperature by adjusting the rotation speed of the second fan 24 cannot be implemented. Then, the rotation speed of the compressor 31 needs to be increased to F2-2. By increasing the rotation speed of the compressor 31, the flow of the coolant in the air conditioning system 30 can be increased, thereby effectively reducing the temperature of the battery pack 201.

When both the passenger compartment and the battery pack 201 have a cooling need, a maximum value of the rotation speed G1 and the rotation speed G2 is an actual rotation speed of the second fan 24. In other words, when both the passenger compartment and the battery pack 201 need to dissipate heat, the temperature of the coolant is relatively high. Therefore, a maximum value is selected from the rotation speed G1 and the rotation speed G2 as the actual rotation speed of the second fan 24, so that the temperature of the passenger compartment and the temperature of the battery pack 201 can be effectively reduced.

A vehicle 200 according to an embodiment of a second aspect of the present disclosure includes, with reference to FIG. 6, the foregoing thermal management system 100.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily directed at a same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A thermal management system (100) of a vehicle (200), comprising:
an engine cooling system (10), the engine cooling system (10) comprising:
an engine (11), the engine comprising an intake manifold (111) and a supercharger (112),
an intercooler (12), an air outlet end (121) of the intercooler (12) being in communication with the intake manifold (111), and an air inlet end (122) of the intercooler (12) being in communication with the supercharger (112),
a first radiator (15), the first radiator (15) being connected to the engine (11), and
a first fan (13), the first fan (13) being configured to dissipate heat from the intercooler (12) and the first radiator (15);
an air conditioning system (30), the air conditioning system (30) comprising a condenser (33); and
a low-temperature cooling system (20), the low-temperature cooling system (20) comprising:
a second radiator (22), and
a second fan (24), the second fan (24) being configured to dissipate heat from the second radiator (22) and the condenser (33).

2. The thermal management system (100) of the vehicle (200) according to claim 1, the thermal management system (100) further comprising:
a controller (40), the controller (40) being configured to control running of the engine cooling system (10) according to a temperature of a coolant of the engine (11).

3. The thermal management system (100) of the vehicle (200) according to claim 2, wherein the engine cooling system (10) further comprises:
an electronic thermostat (17), the electronic thermostat (17) is arranged between a first end (113) of the engine (11) and a third end (151) of the first radiator (15); and
a first water pump (14), the first water pump (14) is arranged between a second end (114) of the engine (11) and a fourth end (152) of the first radiator (15);
wherein the controller (40) is configured to adjust a rotation speed of the first water pump (14) and an opening degree of the electronic thermostat (17) according to the temperature of the coolant of the engine (11).

4. The thermal management system (100) of the vehicle (200) according to claim 2, wherein the engine cooling system (10) further comprises: a first temperature sensor (16), the first temperature sensor (16) is arranged between the first radiator (15) and the engine (11), and the first temperature sensor (16) is configured to detect the temperature of the coolant of the engine (11); and
the controller (40) is configured to adjust a rotation speed of the first fan (13) according to the temperature of the coolant of the engine (11).

5. The thermal management system (100) of the vehicle (200) according to claim 4, wherein the controller (40) is configured to:
first adjust a rotation speed of the first water pump (14) and an opening degree of the electronic thermostat (17) according to the temperature of the coolant, and then adjust the rotation speed of the first fan (13) according to the temperature of the coolant.

6. The thermal management system (100) of the vehicle (200) according to claim 1, the thermal management system (100) further comprising:
a controller (40), the controller (40) being configured to control running of the low-temperature cooling system (20) according to a temperature of a coolant.

7. The thermal management system (100) of the vehicle (200) according to claim 6, wherein the low-temperature cooling system (20) is formed with a first branch and a second branch arranged in parallel, and the low-temperature cooling system (20) further comprises:
a second water pump (23);
a second temperature sensor (28), the second temperature sensor (28) is connected in series with the second water pump (23) and the second radiator (22);
a drive motor (21), the drive motor (21) is connected to the first branch; and
a motor controller (25), the motor controller (25) is electrically connected to the drive motor (21), and the motor controller (25) is connected to the second branch;
wherein the controller (40) is configured to adjust a rotation speed of the second water pump (23) and a rotation speed of the second fan (24) according to the temperature of the coolant.

8. The thermal management system (100) of the vehicle (200) according to claim 7, wherein the low-temperature cooling system (20) further comprises:
a generator (26), the generator (26) is electrically connected to the motor controller (25), and the generator (26) is connected in series with the motor controller (25) on the second branch; and
a direct current distributor (27), the direct current distributor (27) is electrically connected to the motor controller (25), and the direct current distributor (27) is connected in series with the drive motor (21) on the first branch.

9. The thermal management system (100) of the vehicle (200) according to claim 7 or 8, further comprising:
an expansion kettle (36), the expansion kettle (36) being provided with a water inlet (361) and a water outlet (362), the water outlet (362) being connected to a liquid inlet (231) of the second water pump (23), and the water inlet (361) being in communication with the second radiator (22).

10. The thermal management system (100) of the vehicle (200) according to any one of claims 1 to 9, wherein the air conditioning system (30) comprises:
a compressor (31);
an evaporator (32); and
a first control valve (34), the first control valve (34) is connected in series with the compressor (31), the evaporator (32), and the condenser (33).

11. The thermal management system (100) of the vehicle (200) according to claim 10, wherein the air conditioning system (30) further comprises:
a second control valve (35); and
a heat exchanger (38), the heat exchanger (38) and the second control valve (35) are arranged in series, the heat exchanger (38) and the second control valve (35) are arranged in parallel with the evaporator (32), and the heat exchanger (38) is adapted to exchange heat with a battery pack (201).

12. The thermal management system (100) of the vehicle (200) according to claim 11, the thermal management system (100) further comprising:
a controller (40), the controller (40) being configured to control switching of the first control valve (34) and the second control valve (35) according to a temperature of the battery pack (201) and a temperature of a passenger compartment, and the controller (40) being configured to adjust a rotation speed of the compressor (31) and the rotation speed of the second fan (24).

13. A vehicle (200), comprising: the thermal management system (100) of the vehicle (200) according to any one of claims 1 to 12.
